(19) Europäisches Patentamt
European Patent Office
Office européen des brevets

(11) **EP 2 424 763 B1**

(12) **EUROPÄISCHE PATENTSCHRIFT**

(45) Veröffentlichungstag und Bekanntmachung des Hinweises auf die Patenterteilung:
**11.09.2013  Patentblatt 2013/37**

(21) Anmeldenummer: **10705868.7**

(22) Anmeldetag: **25.02.2010**

(51) Int Cl.:
**B62D 5/04** (2006.01)

(86) Internationale Anmeldenummer:
**PCT/EP2010/052369**

(87) Internationale Veröffentlichungsnummer:
**WO 2010/124888 (04.11.2010 Gazette 2010/44)**

(54) **ERMITTLUNG EINER STELLGRÖSSE FÜR EINE ANSTEUERUNG EINES MOMENTENSTELLERS IN EINER FAHRZEUGLENKUNG**

DETERMINATION OF A CORRECTING VARIABLE FOR CONTROLLING A MOMENT REGULATOR IN A VEHICLE STEERING SYSTEM

DÉTERMINATION D'UNE GRANDEUR DE RÉGLAGE POUR LA COMMANDE D'UN RÉGULATEUR DE COUPLE DANS UN SYSTÈME DE DIRECTION DE VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.04.2009  DE 102009002703**

(43) Veröffentlichungstag der Anmeldung:
**07.03.2012  Patentblatt 2012/10**

(73) Patentinhaber: **ZF-Lenksysteme GmbH**
**73527 Schwäbisch Gmünd (DE)**

(72) Erfinder: **GRÜNER, Stefan**
**71549 Auenwald (DE)**

(56) Entgegenhaltungen:
**WO-A1-02/076806          DE-A1-102006 057 880**
**DE-A1-102007 042 874**

EP 2 424 763 B1

**Beschreibung**

Die Erfindung betrifft ein Verfahren zur Ermittlung einer Stellgröße für eine Ansteuerung eines Momentenstellers in einer elektrischen Fahrzeuglenkung, wobei die Ermittlung der Stellgröße in Abhängigkeit von einem vorgegebenen Soll-Drehstabmoment erfolgt.

Die Erfindung betrifft auch ein Steuergerät zur Steuerung/Regelung einer Lenkung in einem Fahrzeug, wobei die Lenkung einen Momentensteller aufweist und wobei das Steuergerät Mittel zum Ansteuern des Momentenstellers mittels eines Stellsignals und Mittel zum Ermitteln des Stellsignals in Abhängigkeit von einem vorgegebenen Soll-Drehstabmoment aufweist.

Die Erfindung betrifft ferner ein Computerprogramm, das auf einem Steuergerät zur Steuerung/Regelung einer Lenkung und insbesondere auf einem Mikroprozessor in dem Steuergerät ablauffähig ist.

Bei einer elektrischen Servolenkung wird von einem Fahrer eine Betätigungskraft an einem Lenkmittel, beispielsweise einem Lenkrad, aufgebracht, um einen aktuellen Lenkwinkel zu ändern beziehungsweise beizubehalten. Mittels eines Elektromotors wird eine Unterstützungskraft oder ein Unterstützungsmoment erzeugt, das eine Verstärkung der von dem Fahrer aufgebrachten Betätigungskraft bewirkt. Das so bestimmte Unterstützungsmoment wird mit weiteren Maßnahmen stabilisiert, beispielsweise um zu verhindern, dass unerwünschte Momentensprünge auftreten.

Die Verstärkung der Betätigungskraft beziehungsweise des Betätigungsmoments kann insbesondere in Abhängigkeit von dem Betätigungsmoment erfolgen, so dass beispielsweise bei einem besonders hohen Betätigungsmoment eine geringere Verstärkung realisiert wird als bei einem niedrigeren Betätigungsmoment oder umgekehrt.

Aus der DE 101 15 018 A1 ist ein Verfahren zum Betreiben einer elektrischen Servolenkung bekannt, bei dem mittels eines Zustandsreglers aus dem aktuellen Systemzustand des Lenksystems ein Stellsignal für die Ansteuerung des Elektromotors ermittelt wird, um ein momentfreies Lenken zu realisieren. Hierbei ist dem Zustandsregler ein Zustandsbeobachter vorgeschaltet, der Zustandsgrößen des Lenksystems beobachtet und daraus für den Zustandsregler geeignete Eingangsgrößen ermittelt. Als Zustandsgrößen des Lenksystems werden eine ritzelseitige Winkelgeschwindigkeit, eine Winkeldifferenz zwischen Lenkrad und Ritzelseite, eine Winkelgeschwindigkeitsdifferenz zwischen Lenkrad und Ritzelseite sowie ein aktuelles von dem Elektromotor erzeugtes Drehmoment herangezogen. Die so bestimmte Stellgröße ermöglicht damit ein momentfreies Lenken, zunächst jedoch ohne eine Berücksichtigung von Störgrößen. Um schließlich auch eine Berücksichtung von Störgrößen zu ermöglichen, ist bei der bekannten Lenkung ein Störgrößenbeobachter zur Ermittlung von Störzuständen vorgesehen, wobei als Störzustände das von einem Fahrer aufgebrachte Drehmoment oder an der Lenkung angreifende Reibmomente angesehen werden.

Das endgültige Stellsignal wird dann aus dem ein momentenfreies Lenken ermöglichenden Stellsignal durch Aufschaltung der Störgrößen sowie durch Aufschaltung eines vorgebbaren Soll-Drehstabmoments ermittelt. Um eine aufwändige Messung der Zustandsgrößen des Lenksystems zu umgehen, beziehungsweise um nicht messbare Zustände dennoch berücksichtigen zu können, ist vorgesehen, ein Modell des Lenksystems für eine Schätzung der nicht messbaren Zustandsgrößen heranzuziehen. Die geschätzten Zustandsgrößen des Lenksystems entsprechen damit dem Verhalten des Modells des Lenksystems.

Eine Genauigkeit des mittels des bekannten Systems eingestellten Ist-Drehstabmoments hängt damit maßgeblich von der Messung beziehungsweise Schätzung der Systemzustandsgrößen und der Störgrößen ab. Die Störgrößen beziehungsweise das in Abhängigkeit von dem Störgrößenbeobachter ermittelte und zur Bestimmung der Stellgröße aufgeschaltete Moment kompensiert hierbei eine Abweichung des realen Lenksystems zu dem angenommenen Modellverhalten. Die Genauigkeit der Ermittlung der Stellgröße ist damit abhängig von der Güte einer Kompensation von Abweichungen des realen Lenksystems zu dem Modellverhalten, Ferner ist die Genauigkeit abhängig von der Güte des gewählten Modells.

Des Weiteren offenbart Dokument DE 102007042874 A1 der Präambel des Anspruchs 1.

Aufgabe der Erfindung ist es, eine Möglichkeit zur Ermittlung einer Stellgröße bereitzustellen, die die Einstellung eines möglichst genauen Soll-Drehstabmoments ermöglicht.

Die Aufgabe wird durch ein Verfahren der eingangs genannten Art dadurch gelöst, dass ein Ist-Drehstabmoment erfasst wird, ein Differenzmoment aus dem Soll-Drehstabmoment und dem Ist-Drehstabmoment gebildet wird und die Stellgröße mittels eines Output-feedback-Reglers in Abhängigkeit von dem Differenzmoment ermittelt wird.

Ein Output-feedback-Regler ermöglicht eine Regelung des Lenksystems ohne Kenntnis des gesamten Zustand des Lenksystems. Vielmehr genügt bereits eine geringe Anzahl von gemessenen Größen. Hierbei ist es zunächst besonders vorteilhaft, wenn nur das zu regelnde Ist-Drehstabmoment gemessen wird. Das erfindungsgemäße Verfahren ermöglicht es bereits nur aus dem gemessenen Ist-Drehstabmoment eine besonders hohe Genauigkeit des einzustellenden Drehstabmoments dadurch zu erreichen, dass auf Basis eines Vergleichs des Soll-Drehstabmoments zu dem Ist-Drehstabmoment eine tatsächliche Regelung des Drehstabmoments erreicht wird, wohingegen bei den bekannten Verfahren in Folge der Berücksichtigung der Störgrößen durch eine Aufschaltung und durch die Aufschaltung des Sollmoments lediglich eine Steuerung des Drehstabmoments möglich ist. Gegenüber dem aus der DE 101 15 018 A1 bekannten Stand der Technik hat das erfindungsgemäße Verfahren ferner den Vorteil, dass keine explizite Schätzung oder Messung von Systemzustandsgrößen oder Störgrößen notwendig ist. Ferner ist das erfindungsgemäße Verfahren ohne Zustandsgrößenbeobachter und Störgrößenbeobachter ausführbar.

Bei dem erfindungsgemäßen Verfahren wird eine Genauigkeit bereits dadurch erhöht, dass bei dem erfindungsgemäßen Verfahren eine Einregelung auf das Soll-Drehstabmoment erfolgt und nicht ein Umweg über eine momentenfreie Lenkung notwendig ist.

Das erfindungsgemäße Verfahren hat ferner den Vorteil, dass der Entwurf des Output-feedback-Reglers anhand von Anforderungen an das Verhalten des geschlossenen Regelkreises erfolgen kann. Damit können direkt Anforderungen an das dynamische und stationäre Verhalten von Abweichungen zwischen Soll-Drehstabmoment und Ist-Drehstabmoment gestellt und realisiert werden. Eine Berücksichtigung eines Modells des Lenksystems, eine Erfassung oder ein Schätzung von Zustandsgrößen und Störgrößen ist bei der Verwendung eines Output-feedback-Reglers nicht notwendig. Das erfindungsgemäße Verfahren ermöglicht damit nicht nur eine Erhöhung der Genauigkeit des eingeregelten Ist-Drehstabmoments, sondern reduziert auch den Aufwand bei der Erstellung eines Systems zur Ermittlung von Stellgrößen zur Ansteuerung des Elektromotors.

Vorzugsweise wird das Ist-Drehstabmoment gefiltert und es wird anstelle des Ist-Drehstabmoments das gefilterte Ist-Drehstabmoment für die Bildung des Differenzmoments herangezogen. Dies ermöglicht eine individuelle Formbarkeit des Störungsverhaltens. Beispielsweise können kurzzeitig auftretende Änderungen des Ist-Drehstabmoments ignoriert werden, so dass diese Störungen zunächst keine Änderung der Stellgrößen bewirken.

Es ist ferner vorteilhaft, wenn das Soll- Drehstabmoment gefiltert wird und anstelle des Soll- Drehstabmoments das gefilterte Soll- Drehstabmoment für die Bildung des Differenzmoments herangezogen wird. Analog zu der Filterung des Ist- Drehstabmoments kann durch die Filterung des Soll- Drehstabmoments eine individuelle Formbarkeit des Führungsverhaltens erreicht werden, ohne dass Eingriffe in einzelne Parameter des Output- feedback- Reglers notwendig wären.  Gemäß einer anderen vorteilhaften Ausführungsform werden das Ist- Drehstabmoment und das Soll- Drehstabmoment dem Output- feedback- Regler zugeführt und es wird das Differenzmoment in dem Output- feedback- Regler erzeugt. Dies ermöglicht eine besonders kompakte Realisierung des Output- feedback- Reglers, da keine weiteren Operationen für die Bereitstellung der notwendigen Eingangssignale extern durchgeführt werden müssen. Ferner kann dadurch erreicht werden, dass das Soll- Drehstabmoment und das Ist- Drehstabmoment unabhängig voneinander in dem Output- feedback- Regler berücksichtigt werden können, wodurch eine nochmals erhöhte Genauigkeit der zu erzeugenden Stellgröße erreicht wird.

Gemäß einer bevorzugten Ausführungsform des erfindungsgemäßen Verfahrens erfolgt die Ermittlung der Stellgröße zusätzlich in Abhängigkeit von einem aktuellen Wert der Stellgröße. Hierbei kann der aktuelle Wert der Stellgröße dem Regler von außen zugeführt werden oder er kann intern wieder als Eingangsgröße rückgeführt werden. Dies ermöglicht eine Berücksichtigung von externen Beschränkungen der Stellgröße. Ferner ermöglicht dies die Berücksichtigung einer möglicherweise folgenden Fremdsteuerung des Momentenstellers, beispielsweise um ein gewünschtes Handmoment jenseits des Messbereichs eines Handmomentsensors zu realisieren.

Die Aufgabe wird auch durch ein Steuergerät der eingangs genannten Art dadurch gelöst, dass das Steuergerät Mittel zur Bildung eines Differenzmoments aus dem Soll-Drehstabmoment und einem Ist-Drehstabmoment aufweist und in dem Steuergerät ein Output-feedback-Regler ausgebildet ist, mittels dessen die Stellgröße in Abhängigkeit von dem Differenzmoment ermittelbar ist. Das erfindungsgemäße Steuergerät weist insbesondere Mittel zur Durchführung des erfindungsgemäßen Verfahrens auf.

Von besonderer Bedeutung ist die Realisierung des erfindungsgemäßen Verfahrens in der Form eines Computerprogramms, das auf einem Steuergerät zur Steuerung/ Regelung einer Lenkung in einem Fahrzeug und insbesondere auf einem Mikroprozessor in dem Steuergerät ablauffähig ist und zur Ausführung des erfindungsgemäßen Verfahrens programmiert ist. In diesem Fall wird also die Erfindung durch das Computerprogramm realisiert, so dass dieses Computerprogramm in gleicher Weise die Erfindung darstellt, wie das Verfahren, zu dessen Ausführung das Computerprogramm programmiert ist. Das Computerprogramm ist vorzugsweise auf einem Speicherelement abgespeichert. Als Speicherelement kann ein optisches, elektrisches oder magnetisches Speichermedium zur Anwendung kommen, beispielsweise eine Digital Versatile Disc (DVD) , eine Festplatte (Hard Disc) , ein Random- Access- Speicher, ein Read-Only- Speicher oder ein Flash- Speicher.

Zeichnungen

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden. Es zeigen:

Figur 1     eine schematische Darstellung einer elektrischen Lenkung in einem Fahrzeug mit einem Steuergerät;

Figur 2     eine schematische Darstellung eines erfindungsgemäßen Output-feedback-Reglers; und

Figur 3    eine schematische Darstellung des bekannten Verfahrens zur Bestimmung eines Unterstützungsmoments.

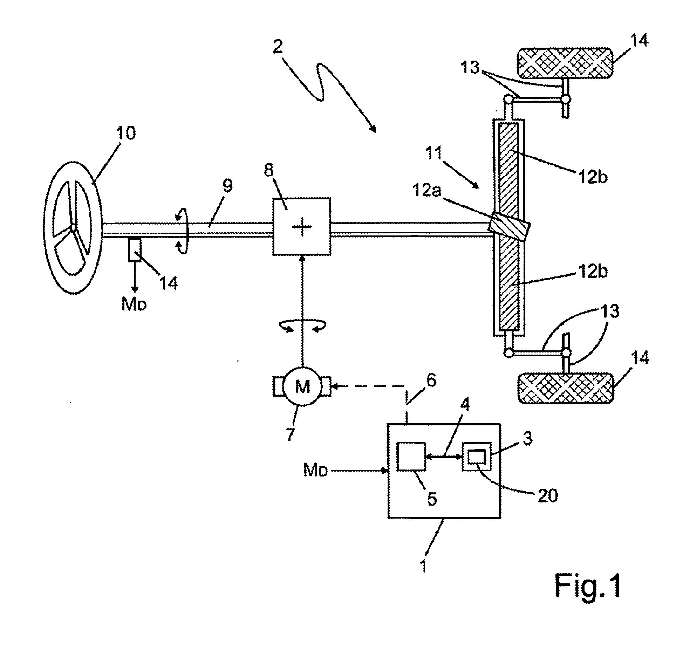

In Figur 1 ist ein Steuergerät 1 dargestellt, das einer Lenkung 2 zugeordnet ist. In dem Steuergerät 1 ist ein Mikroprozessor 3 angeordnet, der über eine Datenleitung 4, beispielsweise ein Bussystem, mit einem Speicherelement 5 verbunden ist. Über eine Signalleitung 6 ist das Steuergerät 1 mit einem Momentensteller 7, der beispielsweise als Elektromotor ausgebildet ist, verbunden, so dass eine Steuerung des Momentenstellers 7 durch das Steuergerät 1 ermöglicht wird. Der Momentensteller 7 wirkt über ein Getriebe 8 auf einen Drehstab 9, an dem ein Lenkmittel, beispielsweise ein Lenkrad 10, angeordnet ist.

Die Lenkung 2 weist ferner ein Lenkgetriebe 11 auf, das beispielsweise als Zahnstangenlenkgetnebe ausgebildet ist. Das Lenkgetriebe 11 kann alternativ auch als Kugelumlaufgetriebe beziehungsweise als Kugelmuttergetriebe ausgebildet sein. In der folgenden Beschreibung wird überwiegend von einer Zahnstangenlenkung ausgegangen, wobei das Lenkgetriebe ein Ritzel 12a und eine Zahnstange 12b umfasst, so dass der Drehstab 9 über das Ritzel 12a und die Zahnstange 12b über Lenkgestänge 13 mit Rädern 14 zusammenwirkt.

Die Lenkung 2 weist ferner einen Momentensensor 14 zur Erfassung eines Drehstabmoments $M_D$ und (nicht dargestellte) Mittel zur Übermittlung des aktuellen Drehstabmoments $M_D$ an das Steuergerät 1 auf.

Die in Figur 1 dargestellte Lenkung 2 stellt nur eine von einer Vielzahl möglicher Ausführungsformen von für die Durchführung des erfindungsgemäßen Verfahrens geeigneten Lenkvorrichtungen dar. Andere Ausführungsformen können beispielsweise durch andere Lenkgetriebe oder durch eine andere Anordnung des Momentenstellers 7 oder durch weitere Momentensteller, beispielsweise weitere Elektromotoren, ausgeführt sein. Ferner kann der Sensor 14 an einer anderen Stelle angeordnet sein.

In dem Steuergerät 1 ist ein Output-feedback-Regler 20 ausgebildet, der beispielsweise in Form eines Computerprogramms realisiert ist und in dem Speicherelement 3 abgespeichert wird. Bei einer Durchführung des erfindungsgemäßen Verfahrens wird das den Output-feedback-Regler 20 realisierende Computerprogramm auf dem Mikroprozessor 3 ausgeführt. Der Output-feedback-Regler 20 erhält als Eingabe zumindest das Ist-Drehstabmoment $M_D$ sowie ein Soll-Drehstabmoment $M_{D,ref}$. In Abhängigkeit von den Eingangsgrößen bestimmt der Output-feedback-Regler 20 eine Stellgröße $M_M$, die über die Datenleitung 6 an den Elektromotor 7 übermittelt wird und eine Ansteuerung des Elektromotors 7 ermöglicht, um das Soll-Drehstabmoment $M_{D,ref}$ einzuregeln.

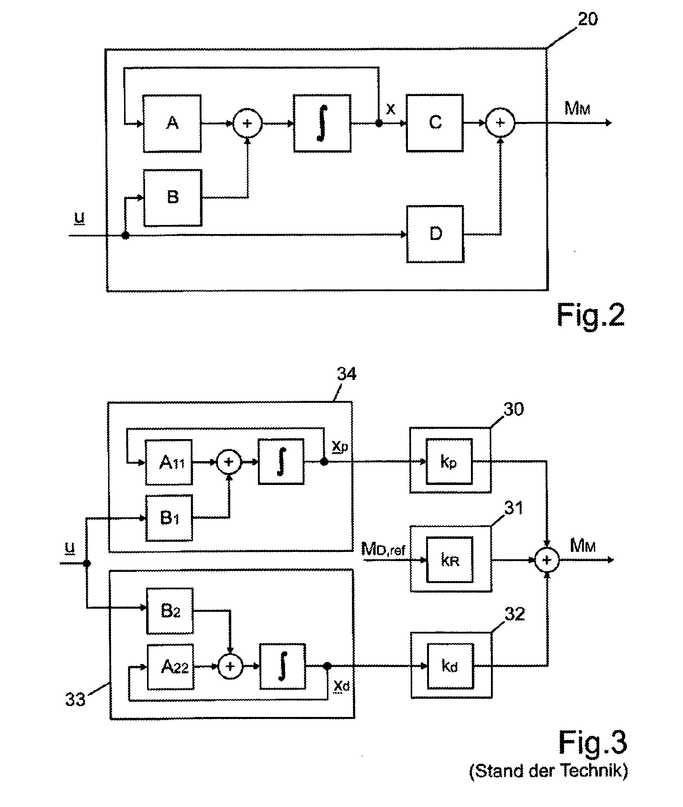

In Figur 2 ist eine mögliche Ausführungsform des Output-feedback-Reglers 20 schematisch dargestellt. Der Output-feedback-Regler 20 genügt eine Rechenvorschrift der Form:

$$\mathrm{x}_{r,k+1} = A\mathrm{x}_{r,k} + Bu_k$$

$$y_k = Cx_{r,k} + Du_k,$$

wobei $y_k$ ein Vektor ist, der die aktuell angeforderten Stellgrößen, also die Stellgröße zur Ansteuerung des Momentenstellers 7 beschreibt.

$u_k$ ist ein Vektor, der die aktuellen Messgrößen und die aktuellen Soll- Größen beschreibt, also zumindest das Ist- Drehstabmoment $M_D$ und das Soll- Drehstabmoment $M_{D,ref}$ umfasst.

$x_{r,k}$ ist ein Vektor, der den aktuellen internen Zustand des Output- feedback- Reglers 20 bezeichnet. Selbstverständlich entspricht der interne Zustand des Output- feedback- Reglers 20 nicht dem Zustand des Lenksystems 2 beziehungsweise einem Ersatzmodell des Lenksystems, das für die Ermittlung von Störgrößen bei aus dem Stand der Technik bekannten Systemen herangezogen wird.

$A, B, C$ und $D$ beschreiben Reglermatrizen, die mit Hilfe bekannter Entwurfsmethoden für Output- feedback-Regler bestimmt werden. Bei der Festlegung der Reglermatrizen $A, B, C$ und $D$ wird berücksichtigt, dass nur gewisse Größen, also beispielsweise lediglich das Ist- Drehstabmoment $M_D$, zur Verfügung stehen.

Der Vektor $u_k$ kann insbesondere auch die aktuell realisierte Stellgröße umfassen. Dies ermöglicht beispielsweise die Berücksichtigung von

Stellgrößenbeschränkungen. Hierbei kann die aktuell realisierte Stellgröße insbesondere auch durch eine Abschätzung dieser Größe bestimmt sein, wobei eine Abschätzung die Begrenzungen und Sonderfunktionen berücksichtigt. Dadurch, dass die aktuell realisierte Stellgröße dem Output-feedback-Regler 20 zusammen mit dem Vektor $u_k$ als Eingangssignal zur Verfügung gestellt wird, können auch systembedingte Stellgrößenbeschränkungen berücksichtigt werden. Ebenso kann die Reduktion der Stelleraussteuerung aufgrund von externen Anforderungen berücksichtigt werden. Weiterhin ermöglicht eine Rückführung der aktuell realisierten Stellgröße auch eine Fremdsteuerung des Stellers zur Realisierung von gewünschten Handmomenten jenseits des Messbereichs von Sensoren, die für die Erfassung des Handmoments vorgesehen sind.

In Figur 3 ist ein Blockschaltbild des aus der DE 101 15 018 A1 vorbekannten Systems zur Bestimmung des Unterstützungsmoments $M_M$ dargestellt. Das bekannte Verfahren ermittelt zunächst mittels des Zustandsreglers 30 ein Moment, das zur Erzeugung einer momentenfreien Lenkung notwendig wäre. Mittels eines Funktionselements 31 wird das Soll-Drehstabmoment $M_{D,ref}$ in geeigneter Weise verstärkt und mittels eines Funktionselements 32 werden Störgrößen in geeigneter Weise verstärkt. Die von den Funktionselementen 31 und 32 ermittelten Werte werden dann auf das für eine momentenfreie Lenkung notwendige Moment aufgeschaltet.

Das bekannte System weist ferner einen Störgrößenbeobachter 33 und einen Zustandsbeobachter 34 auf. Das bekannte Verfahren realisiert damit eine Gleichung der Form

$$\begin{bmatrix} x_p \\ \hline x_d \end{bmatrix}_{k+1} = \begin{bmatrix} A_{11} & 0 \\ 0 & A_{22} \end{bmatrix} \begin{bmatrix} x_p \\ \hline x_d \end{bmatrix}_k + \begin{bmatrix} B_1 \\ B_2 \end{bmatrix} u_k$$

$$M_{M,k} = \begin{bmatrix} K_p & K_d \end{bmatrix} \begin{bmatrix} x_p \\ x_d \end{bmatrix} + K_r M_{D,ref,k}$$

Darin bezeichnet $u_k$ die aktuellen Messsignale. Die Matrizen $A_{11}$ und $B_1$ beschreiben das Verhalten des Zustandsbeobachters 34. Die Matrizen $A_{22}$ und $B_2$ beschreiben das Verhalten des Störgrößenbeobachters 33. Bereits diese Gleichung zeigt, dass bei dem aus dem Stand der Technik bekannten Verfahren kein Vergleich zwischen Soll-Drehstabmoment und Ist-Drehstabmoment realisiert wird und somit keine Regelung des Drehstabmoments stattfindet.

Das erfindungsgemäße Verfahren ermöglicht damit gegenüber dem bekannten Verfahren eine einfachere zu realisierende Ermittlung einer Stellgröße zur Einstellung eines Handmoments, wobei insbesondere eine Regelung des das Handmoment realisierenden Drehstabmoments möglich ist, so dass eine besonders genaue Einstellung der notwendigen Stellgröße möglich ist. Ferner benötigt das erfindungsgemäße Verfahren keine explizite Vorgabe von gemessenen oder geschätzten Störgrößen. Insbesondere ist das erfindungsgemäße Verfahren nicht von einem Modell des Lenksystems abhängig, das bei aus dem Stand der Technik bekannten Systemen beispielsweise zur Schätzung einzelner Größen herangezogen werden muss.

**Patentansprüche**

1. Verfahren zur Ermittlung einer Stellgröße zur Ansteuerung eines Momentenstellers (7) in einer elektrischen Fahrzeuglenkung (2) in Abhängigkeit von einem vorgegebenen Soll-Drehstabmoment ($M_{D,f}$), wobei ein Ist-Drehstabmoment ($M_D$) erfasst wird, ein Differenzmoment aus dem Soll-Drehstabmoment ($M_{D,rel}$) und dem Ist-Drehstabmoment ($M_D$) gebildet wird **dadurch gekennzeichnet, dass** die Stellgröße mittels eines output-feedback Reglers (20) in Abhängigkeit von dem Differenzmoment ermittelt wird.

2. Verfahren nach Anspruch 1, **dadurch gekennzeichnet, dass** das Ist-Drehstabmoment ($M_D$) gefiltert wird und anstelle des Ist-Drehstabmoments ($M_D$) das gefilterte Ist-Drehstabmoment ($M_D$) für die Bildung des Differenzmoments herangezogen wird.

3. Verfahren nach einem der Ansprüche 1 oder 2, **dadurch gekennzeichnet, dass** das Soll-Drehstabmoment ($M_{D,ref}$) gefiltert wird und anstelle des Soll-Drehstabmoments ($M_{D,ref}$) das gefilterte Soll-Drehstabmoment ($M_{D,ref}$) für die Bildung des Differenzmoments herangezogen wird.

4. Verfahren nach einem der vorangehenden Ansprüche, **dadurch gekennzeichnet, dass** das Ist-Drehstabmoment ($M_D$) und das Soll-Drehstabmoment ($M_{D,ref}$) dem output-feedback Regler zugeführt werden und das Differenzmoment in dem output-feedback Regler erzeugt wird

5. Verfahren nach einem der vorangehenden Ansprüche, **dadurch gekennzeichnet, dass** die Ermittlung der Stellgröße zusätzlich in Abhängigkeit von der aktuellen Stellgröße erfolgt.

6. Steuergerät (1) zur Steuerung/Regelung einer Lenkung (2) in einem Fahrzeug, wobei die Lenkung (2) einen Momentensteller (7) aufweist und wobei das Steuergerät (1) Mittel zum Ansteuern des Momentenstellers (7) mittels eines Stellsignals und Mittel zum Ermitteln des Stellsignals in Abhängigkeit von einem vorgegebenen Soll-Drehstabmoment ($M_{D,ref}$) aufweist, wobei das Steuergerät Mittel zur Bildung eines Differenzmoments aus dem Soll-Drehstabmoment ($M_{D,ref}$) und einem Ist-Drehstabmoment ($M_D$) aufweist **dadurch gekennzeichnet, dass** in dem Steuergerät (1) ein output-feedback Regler (20) ausgebildet ist, mittels dessen die Stellgröße in Abhängigkeit von dem Differenzmoment ermittelbar ist.

7. Steuergerät (1) nach Anspruch 6, **dadurch gekennzeichnet, dass** in dem Steuergerät (1) ein Filterelement zur Filterung des Ist-Drehstabmoments ($M_D$) ausgebildet ist und das Steuergerät (1) Mittel zur Bildung des Differenzmoments aus dem gefilterte Ist-Drehstabmoment ($M_D$) anstatt dem Ist-Drehstabmoment ($M_D$) aufweist.

8. Steuergerät (1) nach einem der Ansprüche 6 oder 7, **dadurch gekennzeichnet, dass** in dem Steuergerät (1) ein Filterelement zur Filterung des Soll-Drehstabmoments ($M_{D,ref}$) ausgebildet ist das Steuergerät Mittel zur Bildung des Differenzmoments aus dem gefilterten Soll-Drehstabmoment ($M_{D,ref}$) anstatt dem Soll-Drehstabmoment ($M_{D,ref}$) aufweist.

9. Steuergerät (1) nach einem der Ansprüche 6 bis 8, **dadurch gekennzeichnet, dass** der output-feedback Regler (20) Mittel zur Bildung des Differenzmoments aufweist.

10. Steuergerät (1) nach einem der Ansprüche 6 bis 9, **dadurch gekennzeichnet, dass** die Stellgröße zusätzlich in Abhängigkeit von der aktuellen Stellgröße ermittelbar ist.

11. Computerprogramm, das auf einem Steuergerät (1) zur Steuerung/Regelung einer Lenkung (2), insbesondere auf einem Mikroprozessor (3) in dem Steuergerät (1) ablauffähig ist, **dadurch gekennzeichnet, dass** das Computerprogramm zur Durchführung eines Verfahrens nach einem der Ansprüche 1 bis 5 programmiert ist.

12. Computerprogramm nach Anspruch 11, **dadurch gekennzeichnet, dass** das Computerprogramm auf einem Speicherelement (5) abgespeichert ist.

## Claims

1. Method for determining an actuating variable for controlling a torque regulator (7) in an electric vehicle steering system (2) as a function of a predefined reference torque-rod torque ($M_{D,ref}$), wherein an actual torque-rod torque ($M_D$) is sensed, a differential torque is formed from the reference torque-rod torque ($M_{D,ref}$) and the actual torque-rod torque ($M_D$), **characterized in that** the actuating variable is determined by means of an output feedback controller (20) as a function of the differential torque.

2. Method according to Claim 1, **characterized in that** the actual torque-rod torque ($M_D$) is filtered and the filtered actual torque-rod torque ($M_D$) is used, instead of the actual torque-rod torque ($M_D$), for the formation of the differential torque.

3. Method according to either of Claims 1 and 2, **characterized in that** the reference torque-rod torque ($M_{D,ref}$) is filtered and the filtered reference torque-rod torque ($M_{D,ref}$) is used, instead of the reference torque-rod torque ($M_{D,ref}$), for the formation of the differential torque.

4. Method according to one of the preceding claims, **characterized in that** the actual torque-rod torque ($M_D$) and the reference torque-rod torque ($M_{D,ref}$) are fed to the output feedback controller and the differential torque is generated in the output feedback controller.

5. Method according to one of the preceding claims, **characterized in that** the actuating variable is additionally determined as a function of the current actuating variable.

6. Control unit (1) for performing open-loop/closed-loop control of a steering system (2) in a vehicle, and wherein the steering system (2) has a torque regulator (7), and wherein the control unit (1) has means for actuating the torque regulator (7) by means of an actuating signal and means for determining the actuating signal as a function of a predefined reference torque-rod torque ($M_{D,ref}$) wherein the control unit has means for forming a differential torque from the reference torque-rod torque ($M_{D,ref}$) and an actual torque-rod torque ($M_D$), **characterized in that** an output feedback controller (20), by means of which the actuating variable can be determined as a function of the differential torque, is embodied in the control unit (1).

7. Control unit (1) according to Claim 6, **characterized in that** a filter element for filtering the actual torque-rod torque ($M_D$) is embodied in the control unit (1), and the control unit (1) has means for forming the differential torque from the filtered actual torque-rod torque ($M_D$) instead of from the actual torque-rod torque ($M_D$).

8. Control unit (1) according to either of Claims 6 and 7, **characterized in that** a filter element for filtering the reference torque-rod torque ($M_{D,ref}$) is embodied in the control unit (1), and the control unit has means for forming the differential torque from the filtered reference torque-rod torque ($M_{D,ref}$) instead of from the reference torque-rod torque ($M_{D,ref}$).

9. Control unit (1) according to one of Claims 6 to 8, **characterized in that** the output feedback controller (20) has means for forming the differential torque.

10. Control unit (1) according to one of Claims 6 to 9, **characterized in that** the actuating variable can be additionally determined as a function of the current actuating variable.

11. Computer program which can run on a control unit (1) for performing open-loop/closed-loop control of a steering system (2), in particular on a microprocessor (3) in the control unit (1), **characterized in that** the computer program is programmed to carry out a method according to one of Claims 1 to 5.

12. Computer program according to Claim 11, **characterized in that** the computer program is stored on a memory element (5).

## Revendications

1. Procédé de détermination d'une grandeur de réglage destinée à commander un contrôleur de couple (7) de la direction électrique (2) d'un véhicule en fonction d'un couple de rotation de consigne prédéterminé ($M_{D,ref}$), dans lequel un couple effectif de rotation ($M_D$) est saisi la différence entre le couple de rotation de consigne ($M_{D,ref}$) et le couple de rotation effectif ($M_D$) est formée,
   **caractérisé en ce que**
   la grandeur de réglage est déterminée au moyen d'un régulateur (20) à sortie rétroactive en fonction de la différence de couple.

2. Procédé selon la revendication 1, **caractérisé en ce que** le couple de rotation effectif ($M_D$) est filtré et **en ce qu'**au lieu du couple de rotation effectif ($M_D$), c'est le couple de rotation effectif filtré ($M_D$) qui est utilisé pour former la différence de couple.

3. Procédé selon l'une des revendications 1 ou 2, **caractérisé en ce que** le couple de rotation de consigne ($M_{D,ref}$) est filtré et **en ce qu'**au lieu du couple de rotation de consigne ($M_{D,ref}$), c'est le couple de rotation de consigne filtré ($M_{D,ref}$) qui est utilisé pour former la différence de couple.

4. Procédé selon l'une des revendications précédentes, **caractérisé en ce que** le couple de rotation effectif ($M_D$) et le couple de rotation de consigne ($M_{D,ref}$) sont amenés au régulateur à sortie rétroactive, la différence de couple étant formée dans le régulateur à sortie rétroactive.

5. Procédé selon l'une des revendications précédentes, **caractérisé en ce que** la détermination de la grandeur de réglage s'effectue de plus en fonction de la grandeur instantanée de réglage.

6. Appareil de commande (1) pour la commande et /ou la régulation d'une direction (2) d'un véhicule, la direction (2) présentant un contrôleur de couple (7) et l'appareil de commande (1) présentant des moyens de commande du contrôleur de couple (7) au moyen d'un signal de réglage et des moyens de détermination du signal de réglage en fonction d'un couple de rotation de consigne prédéterminé ($M_{D,ref}$), l'appareil de commande présentant des moyens de formation d'une différence entre le couple de rotation de consigne ($M_{D,ref}$) et le couple de rotation effectif ($M_D$),
   **caractérisé en ce que**

un régulateur (20) à sortie rétroactive est formé dans l'appareil de commande (1) et permet de déterminer la grandeur de réglage en fonction de la différence de couple.

7. Appareil de commande (1) selon la revendication 6, **caractérisé en ce qu'**un élément de filtrage qui filtre le couple de rotation effectif ($M_D$) est formé dans l'appareil de commande (1) et **en ce que** l'appareil de commande (1) présente des moyens de formation de la différence de couple à partir du couple de rotation effectif filtré ($M_D$) en remplacement du couple de rotation effectif ($M_D$).

8. Appareil de commande (1) selon l'une des revendications 6 ou 7, **caractérisé en ce qu'**un élément de filtrage qui filtre le couple de rotation de consigne ($M_{D,ref}$) est formé dans l'appareil de commande (1) et **en ce que** l'appareil de commande présente des moyens de formation de la différence de couple à partir du couple de rotation de consigne filtré ($M_{D,ref}$) plutôt que du couple de rotation de consigne ($M_{D,ref}$).

9. Appareil de commande (1) selon l'une des revendications 6 à 8, **caractérisé en ce que** le régulateur (20) à sortie rétroactive présente des moyens de formation de la différence de couple.

10. Appareil de commande (1) selon l'une des revendications 6 à 9, **caractérisé en ce que** la grandeur de réglage peut de plus être déterminée en fonction de la grandeur de réglage à tout instant.

11. Programme informatique apte à être exécuté sur un appareil de commande (1) qui assure la commande et/ou la régulation d'une direction (2), en particulier sur un microprocesseur (3) prévu dans l'appareil de commande (1), **caractérisé en ce que** le programme informatique est programmé pour exécuter un procédé selon l'une des revendications 1 à 5.

12. Programme informatique selon la revendication 11, **caractérisé en ce que** le programme informatique est conservé en mémoire sur un élément de mémoire (5).

Fig.1

Fig.2

Fig.3
(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10115018 A1

- DE 102007042874 A1